# DEMANDE DE BREVET EUROPEEN

(11) **EP 0 521 540 A1**
(43) Date de publication de la demande: **07.01.1993**
(21) Numéro de dépôt: 92201147.3
(22) Date de dépôt: 23.04.1992
(51) Int. Cl.: F02B 75/32, F04B 35/00, F02B 53/00, F03G 3/00

(54) **Fusée à pistons**

(30) Priorité: 05.07.1991 FR 9108911
(71) Demandeur: Canot, Albert, F-88390 Darnieulles (FR)
(72) Inventeur: Canot, Albert, F-88390 Darnieulles (FR)

(57) **Abrégé**

Dispositifs autopropulseurs autres que la fusée et le réacteur, systémes capables d'appliquer à l'engin transporteur des forces autopropulsives sans perdre les masses mises en action à l'aide de dispositifs électromagnétiques , ou à pistons droits et toriques (1) , ce à l'aide de défagrations , de détonations , de compressions de gaz comprimé , de systémes élastiques , de volants en rotation , des pistons droits associés à des pistons toriques (1) assurent l'épuration des gaz brulés , ce pour l' automobile , ce dispositif ne perdant pas les forces données sur les culasses et celles perdues sur le vilbrequin au point mort bas , les forces crées par le changement de sens de rotations des pistons(1) de rotation des volants , des demies rotations de masses (2) augmentent le point d'appui sans lequel il n'y a pas d'autopropulsion par réaction , lesforces sur les culasses sont intégralement autopropulsives , des volants (10) sont également capables d'appliquer des forces autopropulsives à l'engin transporteur , l'on connait l'énorme quantité d'énergie que peut enmagasiner un volant , l'arret par ce volant et le rejet vers l'avant de pistons butant des systémes élastiques , pistons chargés de moins d'énergie quand ils butent le volant n'a donc non plus rien d'utopique , les moteurs deux temps autopropulseurs donnent également un mouvement rotatif , le graissage est analogue à celui du quatre temps , la propulsion donnée par le réacteur d'avion et la fusée n'a un rendement acceptable qu'une fois une certaine vitesse obtenue , pas pour ces propulseurs , le point d'appui n'étant pasconstitué par l'inertie d'une masse gazeuse rejetée vers l'arrière , mais par des pistons lourds arrétés dans leur projection et chargés d'une énorme énergie cinétique , car ces moteurs sont forts probablement capables d'utiliser la détonation .

## Description

L'invention perfectionne des dispositifs autopropulseurs à pistons toriques et à pistons droits qui permettront des propulsions de longues durées en particulier en milieu spatial sans rejet de gaz , d'air , d'eau vers l'arriére . Point capital ces propulseurs appliquent des forces au véhicule sans perte de masse .

Ces dispositifs ont été ébauchés dans les brevets Européen 85 440 055,3 , 90 470 067, 1 et divers brevets Français notamment 84 04 794 , 85 13 294 , 89 01 573 , 89 16 434 .

On connait également un dispositif qui préconise également l'utilisation de la force centrifuge et dont les masses sont animées par un dispositif à combustion interne dont les pistons entrent et sortent des cylindres ; brevet 86 17756 .

Un autre propulseur est également connu brevet CALZOLARI 84 01825 , dont la rotation d'une pluralité de massellottes remplace les embiellages d'un moteur à combustion interne .

L'invention est exposées ci-aprés plus en détail et à l'aide de dessins schématiques .

Ces propulseurs peuvent avec l'aide de l'atome donner des propulsions de trés longues durées en milieu spatial sans avoir besoin comme les propulseurs ioniques ou photoniques de torrents d'énergie pour obtenir des poussées dérisoires .

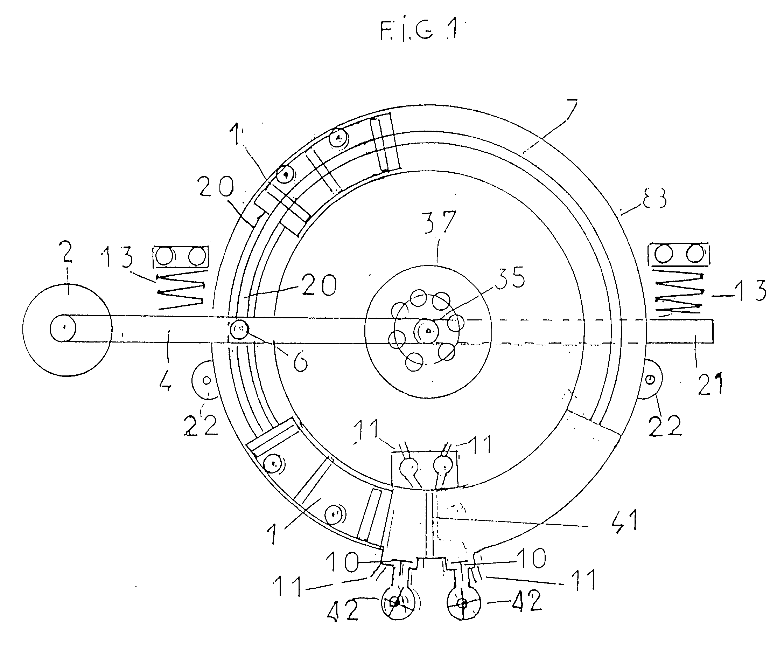

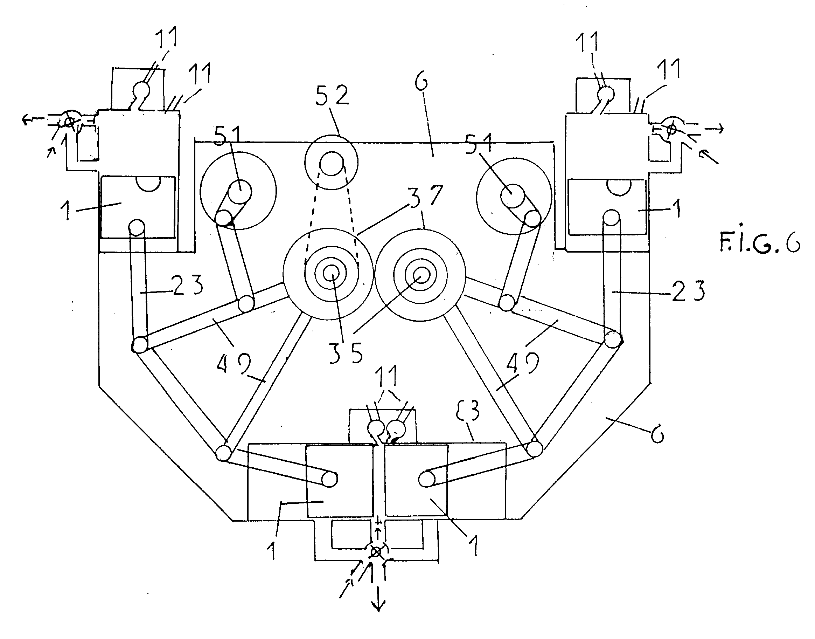

La figure 1 de la planche 1 représente une variante de réalisation qui perfectionne le propulseur à pistons toriques de la figure 10 du brevet Européen 85 440 055,3 , figure 6 du brevet Français 85 13 294 ; qui est un moteur deux temps à pistons toriques qui animent des masses décrivant des rotations incomplétes et qui aident à la propulsion en donnant des forces centrifuges .

Dans le présent brevet les masses (1) sont également animées à l'aide de pistons toriques (2) qui peuvent travailler en moteur deux temps , ou être animés à l'aide d'un gaz comprimé recyclé , ou à l'aide de vapeur ; et les pistons et les segments sont continuellement guidés et maintenus tout le long de leur course .

Les masses (1) sont solidaires de l'axe (3) à l'aide d'un bras (4)solidaire d'une tige torique (5) qui relie deux pistons toriques (2) , un boulon (6)est vissé dans le bras (4) et une partie non filetée de ce boulon circule dans une fente (7) creusée dans la partie du cylindre (8) ou n'a pas lieu l'explosion ; ou l'action du gaz comprimé , ou de la vapeur .

La partie inférieure du boulon (6) est vissée dans la tige torique ( 20 solidaire des pistons (1) .

L'évacuation des gaz brulés , ou comprimés, ou de la vapeur a lieu par la fente (7) , le propulseur étant enfermé dans un carter la récupération des gaz , de la vapeur est assurée .

Ce deux temps peut également fonctionner dans le vide à l'aide d'eau oxygéné à 85% dont la décomposition s'effectuera à l'aide permanganate .

Le mouvement semi-rotatif donné par l'axe (35)peut être transformé en mouvement rotatif à l'aide d'encliquetages actionnant un volant , ce mouvement rotatif peut produire de l'électricité qui animera des compresseurs de comburant(42) actionnera des soupapes (10) électromagnétiques , ou pneumatiques qui permettront l'indroduction du comburant , ou l'injection de gaz comprimé , de vapeur ; ce graçe à des indications données par l'axe (35)à des contacts électriques suivant la position des pistons , des injecteurs de carburant (11) commandés par le sytéme précédemment décrit injectent le carburant ; ces injections peuvent ne pas être simultannées , une premiere injection peut suivant son volume freiner le piston et une deuxiéme le repousser si cela donne lieu à de faibles détonations les pistons travaillant en opposition ils seront arrétés par l'autre détonation et non pas par un embiellage comme sela se passe dans le moteur classique .

Un bras (21) situé de l'autre coté du cylindre et démuni de masse (2) empéche le bris des pistons (1) ce si les explosions sont défectueuses , ou lors de l'arret ces injections , ce bras percute deux systémes élastiques (13) au moment opportun Un engrenage (37) à dents non figurées permet le mariage avec un autre propulseur analogue ce qui permet d'avoir une propulsion rectiligne et de neutraliser les forces de rotation données eventuellement par les systémes élastiques (13).

Ces systèmes élastiques sont solidaires du carter dans lequel est enfermé chaque propulseur .

La mise en route de ce deux temps sans embiellage peut s'effectuer à l'aide d'un moteur électrique classique à polarité alternée afin de donner un mouvement semi-rotatif , de méme les pistons toriques (1)pourraient être animés par un tel systéme et venir buter des ressorts solidaires de l'engin transporteur , des masses(2) peuvent également être animées d'une demie rotation avec le méme systéme .

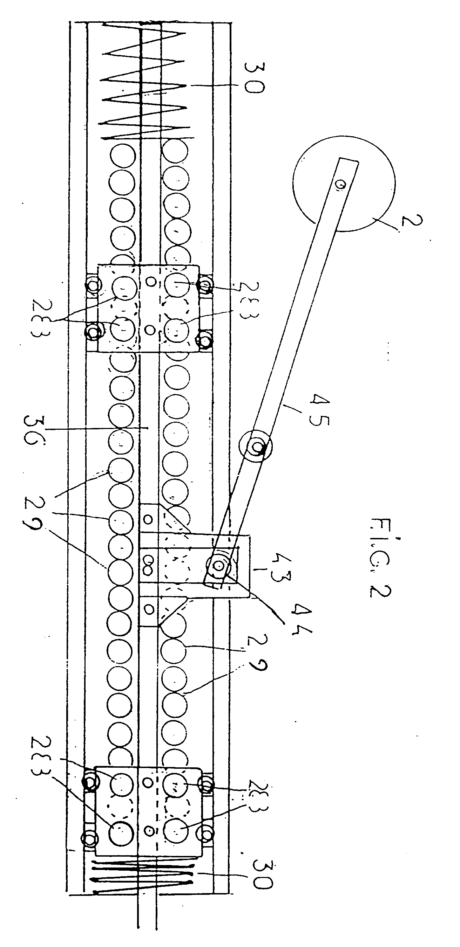

Un moteur électromagnétique linéaire autopropulseur est également possible , dont les masses (2)(figure 2) de deux systémes identiques synchonisés sont animés à l'aide de bobines d'induction (29) disposées linéairement , bobines qui animent des induits (28) solidaires d'une tige coulissante (36) munie d'un rectangle(43) dans lequel coulisse une roulette (44)solidaire d'un levier (45) au bout du quel est fixée une masse(2) , des ressorts(30) aident le courant électrique à polarité alternée à faire décrire à la masse(2) des demie-rotations , les ressorts(30) aidant également au renvoi de la masse(2) .

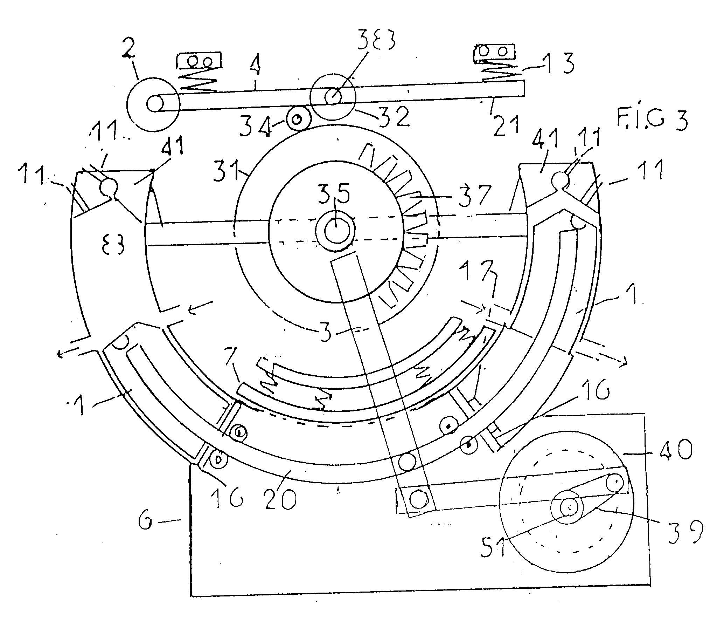

Le moteur deux temps de la figure 3 planche 3 à pistons toriques(1) a été préconisé par le brevet Européen 90 470 067,1 l'invention préconise de lui adjoindre des masses semi-rotatives (2) l'engrenage à dents non figurées (31) étant solidaire de l'engrenage (37) qui sert à marier ce moteur à un autre systéme identique , l'engrenage (31) animant d'autres engrenages (34,32) , l'engrenage (32) étant solidaire d'un demi bras (4) à l'extrémité du quel est fixé la masse(2) , l'autre demi bras (21) est situé sur un plan inférieur à fin que la masse (2) ne puisse décrire que des demie-rotations l'ors de l'arret du moteur , le bras (21) butant alors des systémes élastiques (13) solidaires des carters dans les quels sont contenu les masses semi-rotatives (2) .

L'arret et le changement de sens de rotation des masses(2) par les pistons (1) lors de leur arret et de leur rejet vers l'arriére tout comme le gaz de la fusée augmente le point d' appui sans lequel il ne peut y avoir de propulsion par action et réaction .

Le moteur de la figure 3 est graissé à l'aide d'huile contenu dans le carter (6) , le comburant pouvant être injecté à l' aide de surcompresseurs actionnés par les gaz d'échappement , mais il peut également se servir de ses pistons comme pompe de balayage , si l'on adjoint des cloisons (16) et étant muni de canaux de transfert (non figurés) identique à ceux du deux temps classique .

Ce moteur est muni de deux injecteurs par cylindre(11) les injections de carburant peuvent être simultanées , ou une petite et premiére injection dans la chambre de combustion située dans la culasse peut suivant son volume freiner les pistons (1) et une deuxiéme injection dans la chambre de piston repoussera le piston avant le passage du point mort .

L'emploi de faibles détonations donnerait fort probablement des gaz mieux brulés , l'emploi de deux injecteurs peut permettre l'allumage d'un mélange pauvre par un mélange riche de nature semblable ou différente , l'emploi de la détonation semble possible l'action des forces n'ayant lieu que sur les pistons pas sur les manivelles .

Le dessus des pistons et des culasses peut être revétu de parefeu en céramique , ou autres matériaus , ce pour parer à l'effet de chalumau donné par ladétonation .

Ce moteur autopropulseur peut également donner un mouvement rotatif à l'aide d'encliquetages : dans l'espace il peut également donner une autopropulsion à l'aide d'un gaz comprimé , ou de vapeur .

La figure 4 de la planche 4 représente le propulseur à volants et à pistons droits du brevet Européen 90 470 067,1 propulseur perfectionné par l'invention , ses pistons (46) sont animés par un dispositif électromagnétique constitué par deux volants(10) porteur de bobines d'induction (29) qui animent des induits (28) solidaires des pistons (46) à l'aide de bielles (39,23) . L' invention préconise de marier les deux volants (10) à l'aide de deux engrenages (37) solidaires d'axes (24) dont un sera animé par un moteur non figuré .

L'invention préconise également de rendre les bielles (39) solidaires des induits (28) de triangles (17) qui viendront buter des systémes élastiques (13) qui contriburont à arréter les pistons (46) et à les renvoyer contre les systémes élastiques que butent les pistons .

Les pistons (46) de ce propulseur peuvent également être projetés contre des systémes élastiques (13) à l'aide d'électroaimants disposés à la place des induits (28) ou surajoutés à ceux-ci la périférie du volant étant en cuivre,quand le courant est envoyé aux électro-aimants les volants (10) subissent un effet de freinage ils lancent donc les pistons (46) contre le systéme élastique(13) , les électro-aimants étant solidaires des pistons (46) par l'intermédiaire des bielles (39) sur les quelles ils sont fixés , soi à la place des induits (28) , ou plus à la périphérie du volant dont cette partie est en cuivre et qui tourne entre les piéces polaires de ces électro-aimants La réfrigération des induits , des électro-aimants est réalisée à l'aide de pistons compresseurs de gaz qui compriment un gaz utilisé en réfrigération et qui l'envoi se refroidir dans un radiateur disposé à l'ombre des soleils .

Les systémes élastiques (13) que butent les piéces triangulaires (17) amoindrissent la réaction donnée par le retour des volants (10) , le couple que les systéme (13) donne est neutralisé par le deuxiéme systéme qui tourne de l'autre sens , ces forces seront faibles car les bobines d'induction et/ou les électro-aimants auront déja freiné la réaction des pistons , réaction neutralisé par l'énergie cinétique dont les volants en rotation sont chargés .

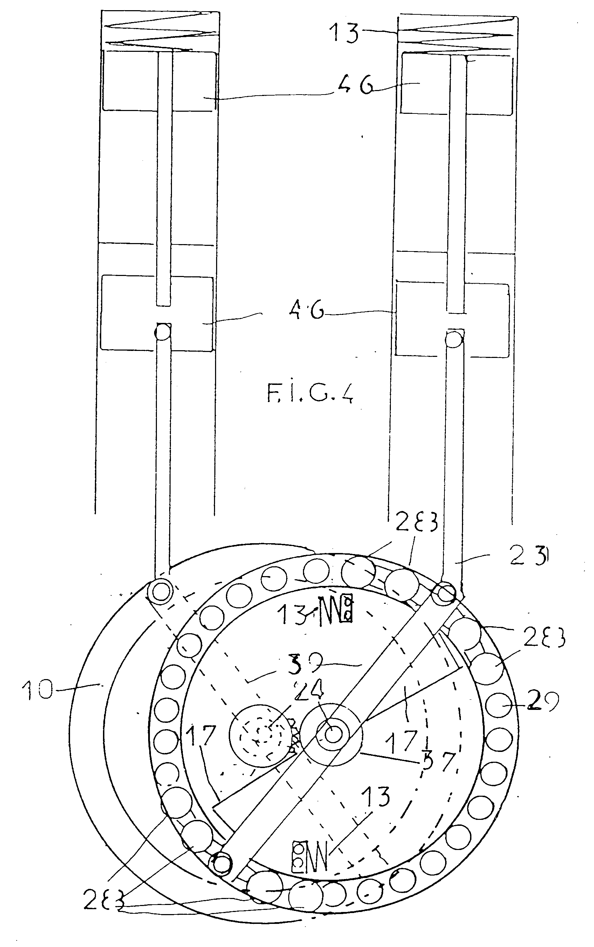

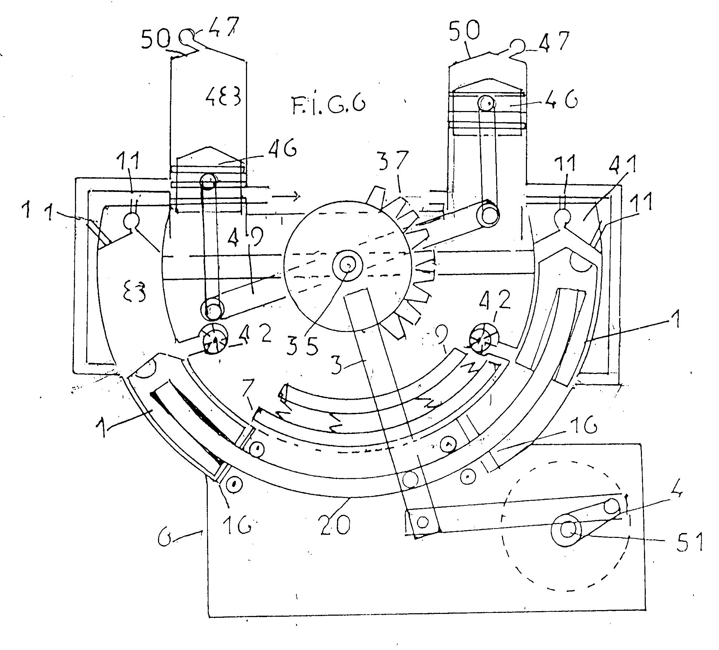

La figure 5 de la planche 5 représente le propulseur à pistons toriques , moteur deux temps de la figure 1 du brevet Européen 90 470 067.1 , l'invention préconise pour ce propulseur convenant également pour l'automobile de recycler les gaz d'échappement provenant des cylindres(8) dans des cylindres droits (48) , la compression de ces gaz brulés , avec ou non d'injection de comburant , de carburant idoine brulera les microparticules inbrulées voir lesoxydes de carbonne .

L'énergie donnée par les pistons (46) augmentera le point d'appui réalisé par l'arret des pistons (1) avant le passage des points morts , et augmentera l'énergie donnée aux roues par les encliquetages qui permettent l'obtention du mouvement rotatif sans contrarier l'autopropulsion .

Les pistons droits (46) sont solidaires de l'engrenage (37) qui marie deux systémes identiques afin d'éviter les couples , un balancier (49) anime les pistons (46) à l'aide de bielles .

Tous les moteurs préconisés peuvent être mis en route à l'aide de comburant comprimé , des surcompresseurs (42) actionnés par les gaz d'échappement peuvent alimenter en air les cylindres(8. Outre l'autopropulsion obtenue par l'arret des pistons(1)avant le passage des points morts des manivelles graçe à des avances à l'injection et/ou à l'allumage des encliquetages à cliquets ou à rouleaux permettent l'animation des roues par le mouvement rotatif obtenu . Un systéme à quatre pistons toriques (1) butant des ressorts et animant à l'aide de moteurs électriques classiques à polarité alterné des pistons toriques (1) et des masses (2) à l' aide d'engrenages (31,32;34) des masses semi-rotatives (2) ,des engrenages (37) mariant deux systémes identiques peut être autopropulseur .

Un dispositif analogue à celui de la figure (3) peut également avoir ses quatre pistons toriques (1) animés à l'aide d'un gaz comprimé , ses pistons (1) butant des ressorts solidaires des culasses(41) et contenus dans les cylindres(8) , les pistons (1) animant à l'aides d'engrenages (31,34,32) des masses ne décrivant que des demies rotations et l'arbre (21) ayant également sa course limitée à l'aide de systémes élastiques (13) , des engrenages (37) mariant deux dispositifs identiques .

Le systéme peut être mixte moteurs à polarité alterné solidaires des axes (35) et injection de gaz comprimé à l'aide de soupapes à commande électromagnétique disposées sur les culasses (41) commandées par des dispositifs connus électriques qui reçoivent leurs indications conçernant la position des pistons(1) à l'aide de l'arbre (35) .

Le dispositif peut être analogue à celui de la figure 3 , démuni de ressorts fonctionne dans l'air à l'aide d'hydrocarbures , dans le vide spatial à l'aide d'eau oxygénée, d'injection de permanganate et une fois obtenue la vitesse de libération de gaz comprimé aidé par des moteurs à polarité alternée . La propulsion donnée par le réacteur d'avion , la fusée n'a un rendement acceptable qu'une fois obtenue une certaine vitesse , pas pour ces propulseurs et ces mote urs , le point d'appui qui permet l'autopropulsion n'étant pas constitué par l'inertie d'une masse gazeuse rejetée vers l'arrière , mais par des pistons lourds arrétés dans leur projection et chargés d'une énorme énergie cinétique .

Les encliquetages donnant le mouvement rotatif ce pour les moteurs à combustion interne peuvent être disposés sur les axes (35), un des encliquetages travaillant dans un sens et l'autre dans l'autre sens , ils peuvent ausi être disposés sur les axes (51)et être solidairez à l'aide d'engrenages droits, d'engrenages d'angles , d'un arbre muni de pignons d'angles . Dés avances à l'injection , à l'allumage évitent le passage des points morts des manivelles .

Le moteur de la figure 6 représente un moteur autopropulseur à pistons droits (1) dont les pistons (1) verticaux appliquent des forces autopropulsives sur les culasses en étant arrétés par une exlosion et rejetés vers l'arriére ; les pistons (1) horizontaux n'engendrant pas de forces antipropulsives .

Ce moteur comme celui de la figure 3 peut également animer deux masses (2) qui outre les forces autotractives qu'elles engendreent augmentent le point d'appui que constituent les pistons(1 arrétés dans leur projection . Pour ce faire des engrenages adéquats (31,32,34) seront solidaires des axes (35) une masse et ses engrenages étant située d'un coté du moteur et l'autre masse(2) ainsi que ses engrenages de l'autre coté , des demis bras (21) butent des systémes élastiques(13) .

Pour l'automobile , ou l'avion ce moteur est muni d'encliquetages donnant le mouvement rotatif , encliquetages solidaires des axes (35) ou (51) .

Pour l'automobile ce moteur peut également être muni de cylindres droits (48) et de pistons (46) organes qui permettent le recyclage des gaz brulés dans les cylindres (48), pistons (46) animés par un balancier (49) , des injections de comburant et de carburant idoine ayant lieu si besoin est dans les cylindres (48) , le brulages des inbrulés augmentera la force donnée sur les encliquetages et le point d'appui pour l'autopropulsion .

Toutes les piéces mobiles de ce moteur peuvent être enfermées dans un carter (6) et graissées par pompe .

Les cylindres sont entourés par des enveloppes étanches afin de pouvoir être refroidi par un fluide solidaire d'un radiateur. Sa mise en route peut avoir lieu à l'aide de comburant comprimé suivi d'injections de carburant idoines , aidées si besoin est par un moteur électrique (52) classique à polarité alternée , ou non alternés .

Si besoin est le balancier (49) peut être animé à l'aide d'engrenages adéquats dont un peut être solidaire de l'axe (35) ce afin que les cylindres (48) soient plus longs , plus volumineux et que la course des pistons (46) soi plus longue .

Ce moteur à pistons droits peut également être muni de deux injecteurs de carburant (11) , un de ces injecteurs injectant dans ne chambre de culasse , l'autre dans une chambre de piston ; ce pour les cylindres verticaux , pour le cylindre horizontal deux chambres de précombustion sont situées sur ce cylindre .

Ces moteurs ne passant pas les points morts des manivelles auront moins de compression que le Diésel , toutefois la double injection de carburant peut fort probablement permettre l' utilisation du carburant utilisé par le Diésel ; une injection servant d'allumette à l'aide d'un carburant idoine , ou ces moteurs peuvent être des semi-diésels .

Les moteurs préconisés sont ils capables d'autopropulsion ?, la théorie qui prétend que toute action engendre une réaction de sens opposé ne semble être valable que si les points d'application des forces d'action et de réaction sont tout deux veerticaux , ce qui n'est pas le cas pour ces propulseurs .

Si nous comparont le rendement d'un moteur à pistons à celui de la fusée la quantité de mouvement obtenu à l'aide de 100 litres d'essence est pour un moteur à pistons d'environt dix chevaux est de 1000Km , montons une fusée sur notre automobile avec 100 L de carburant et 300Kg de comburant combien de kilométres pouvont nous parcourir , certainement pas 1000Km. Il semble donc probable que la consommation d'un moteur à pistons capable d'autopropulsion serait 1000 fois moins grande que celle de la fusée . L'actuelle propulsion par jet de de gaz ou d'air vers l'arriére étant tellement ancrée dans les esprits que d'émminents ingénieurs ont éstimés comme peut probable le fait de réussir à appliquer une force à un véhicule sans perte de masse;n'est-ce-pas ce que réalisent deux masses décrivant deux demies rotations et venant buter deux ressorts qui préfigurent l'arret des pistons-masses des moteurs préconisés , à l'aide d'explosions , de ressorts . Le rejet des masses vers l'arriére ne donnant aucune force contraire à l' autopropulsion , ce qui est facile à vérifier en soudant un ressort sur une de ces masses , les masses n'étant que repropulsées vers les deux ressorts , sans donner aucune force contraires à l'autopropulsion .

Bien entendu l'invention n'est pas limitée aux modes de représentations décrits et représentés par les dessins annéxés , des modifications restent possibles , notamment au point de vue de la constitution des divers éléments ou substitution d' équivalents techniques , sans pour autant sortir du domaine de protection de l'invention .

## Revendications

1. Perfectionnements apportés à des dispositifs autopropulseurs autres que la fusée , caractérisés en ce que les systémes préconisés sont capables d'appliquer à l'engin transporteur des forces autopropulsives sans perdre les masses mises en action à l'aide de dispositifs électromagnétiques , ou à pistons droits et toriques , en ce que l'autopropulsion est réalisée par des demie-rotation de masses(2) , par l'arret et le rejet vers l' arriére et l'avant de pistons droits (46) , toriques (1), ce à l'aide de déflagrations , de détonations , de compressions , de systémes élastiques , de volants en rotation , en ce que des pistons droits (46) associés à des pistons toriques(1) assurent l'épuration des gaz brulés et augmentent le point d'appui que fournissent les pistons toriques(1) , dans le moteur classique les forces de sens contraire appliquées au point mort bas interdisent l'autopropulsion , ces forces sont inéxistantes dans les moteurs préconisés , les forces crées par le changement de sens de rotations des pistons , de rotation des volants , des demie-rotation des masses(2) augmentent le point d'appui , sans lequel il n'y a pas d'autopropulsion par réaction , les forces données sur les culasses sont donc intégralement autopropulsives , l'on connait l'énorme quantité d'énergie que peut enmagasiner un volant , l'arret par ce volant et le rejet vers l'avant de pistons chargés de moins d'énergie n'a donc non plus rien d'utopique.

2. Dispositif autopropulseur utilisant des demies rotation de messes(2) selon la revendication 1, caractérisé en ce que des pistons toriques (1) non munis d'embiellages et ne sortant pas des cylindres (8) font décrire à des masses(2) des demies rotations , pistons (1) solidaires à l'aide d'une tige torique(20) solidaire d'un bras(4), (21) solidaire d'une masse(2), d'un axe(35) , la tige torique (20) étant reliée au bras à l'aide de boulons (6) dont une partie non filetée circule dans la fente (7) creusée dans la partie du cylindre ou non pas lieu les explosions ou les compressions de gaz, de vapeur , en ce que ce bras(4) à un prolongement (21) qui est situé sur un plan inférieur ce qui permet de limiter la course de la masse(2)lors de l'arret des explosions , un engrenage (37) permet l'accouplement à un autre dispositif identique , en ce que cet engrenage (37) est solidaire du demi-bras(4) et du demi-bras(21)qui permet de limiter la course des pistons et des masses(2) en butant des systémes élastiques (13),en ce que les injections de carburant , ont lieu aux moments adéquats à l'aide de systémes connus , afin d'éviter le choc des pistons contre les culasses , l'axe (35) leur indiquant la position des pistons (1), en ce que un encliquetage solidaire de l'axe (35) permet l'obtention du mouvement rotatif

3. Dispositif autopropulseur ne perdant pas les masses qu'il met en action et qui applique des forces autopropulsives sans perte de masse à l'engin transporteur selon la revendication 1, caractérisé en ce que les masses (2) de deux systémes identiques synchonisés sont animées à l'aide de bobines d'induction(29) disposées linéairement , bobines qui animent des induits (28)solidaires d'une tige coulissante (36) munie d'un rectangle (43) dans lequel coulisse une roulette (44) solidaire d'un levier (45) au bout duquel est fixée la masse(2) , des ressorts (30) aident le courant électrique à polarité alternée à faire décrire à la masse( 2) des demie-rotations, des ressorts(30) aident aux renvois de la masse.

4. Dispositif appliquant des forces autopropulsives sans perte de masse à l'engin transporteur selon la revendication 1; caractérisé en ce que un engrenage (31) qui tourne sur l'axe (35) et qui est solidaire de l'engrenage(37) servant à marier ce dispositif à un autre systéme identique animent une masse (2) à laquelle ils ne font décrire que des demie-rotations aidés par les engrenages (32et(34) l'engrenage (32) étant solidaire d'un bras (4) dont son prolongement (21) situé sur un plan inférieur limite la course de la masse(2) en percutant des systémes élastiques (13) , la masse(2) étant solidaire des pistons (1) son changement de sens de rotation augmente le point d'appui que procure l'arret prématuré de ces pistons et leur rejet vers l'arriére(comme le gaz de la fusée)sans forces contraires aux points morts , la demie-rotation de la masse appliquant également des forces autotractives .

5. Dispositif à pistons toriques autopropulseurs et à pistons droits appliquant des forces à l'engin sans perte de masse selon la revendication 1, caractérisé en ce que ce dispositif peut être muni de cloisons(16) et de canaux d'aspiration et de refoulement du gaz frais .

6. Dispositif appliquant des forces autopropulsives sans perte de masses à l'engin transporteur selon la revendication 1 , dispositif caractérisé en ce que les volants (10) porteurs de bobines d'induction sont mariés à l'aide d'engrenages (37) , en ce que les bielles (39) sont solidaires de triangles (17) qui viennent buter ces systémes élastiques (13) , en ce que des électro-aimants peuvent être disposés à la place des induits (28 , ou être surajoutés à ceux-ci , la périférie en cuivre des volants (10) tournant entre les piéces polaires de ces électro-aimants qui sont solidaires des pistons (46) par l'intermédiaire des bielles (39) sur lesquelles ils sont fixés , en ce que l'élimination de la chaleur produite par le freinage du aux électro-aimants est réalisée à l'aide des pistons (46) qui peuvent comprimer un gaz utilisé en réfrigération , et l'envoyer se refroidir dans un radiateur disposé à l'ombre des soleils .

7. Dispositif à pistons droits et toriques qui appliquent des forces autopropulsives sans perte de masse selon la revendication 1 , dispositif caractérisé en ce que les gaz brulés provenant des cylindres ou travaillent les pistons (1) toriques sont recyclés dans des cylindres droits (48) , en ce que les embiellages (49) qui actionnent les pistons (46) sont solidaires d'engrenages (37 ) qui marient ce dispositif à un autre disposif identique , les forces données sur les culasses (50) sont autopropulsives et celles données sur les pistons (46) augmentent le point d'appui donné par l'arret des pistons toriques (1 ayant lieu avant le passage des points morts , les forces exercées sur les pistons (46) augmentent la force donnée sur les roues graçe aux encliquetages .

8. Dispositif appliquant des forces autopropulsives sans perte de masse à l'engin transporteur , selon la revendication 1 caractérisé en ce que un dispositif analogue à celui de la figgure 3 peut avoir ses pistons animés à l'aide d'un gaz comprimé , aidé ou non à l'aide de moteurs électriques à polarité alterné , en ce que ses pistons (1) butent des ressorts soliaires des culasses (41) et contenus dans les cylindres (8) , les pistons (1) pouvant également animer des masses semie-rotatives à l'aide des organes décrits dans la revendication 4 , les injections de gaz comprimé étant réalisée à l'aide de soupapes à commande hydraulique , ou électromagnétique , commandéés à l'aide de dispositifs connus électriques qui reçoivent les indications concernant la position des pistons (1) à l'aide de l'arbre (35) .

9. Dispositif appliquant des forces autopropulsives sans perte de masse à l'engin transporteur , selon la revendication 1 , caractérisé en ce que un moteur autopropulseur deux temps à quatre pistons droits (1) peut également animer des masses semie-rotatives (2) à l'aide des mémes organes que le moteur de la figure 3 décrits dans la revendication 4 , en ce que pour l'automobile il peut également animer deux pistons droits (46) épurateurs de gaz brulés , avec si besoin est des injections de comburant et de carburant idoines dans les cylindres (48) , les organes animant les pistons (46) étant décrits dans la revendication 7 , en ce qu'il peut également être dotés de deux injecteurs de carburant (11) par cylindres, et qu'un carter (6) en permet le graissage sans mélangé d'huile au carburant.

10. Dispositif autopropulseur sans perte de masse selon la revendication 1 caractérisé en ce que ces moteurs deux temps à pistons droits ou toriques peuvent être mis en route à l' aide d'un démarreur en modifiant l'avance à l'injection ou à l'allumage , en ce que une fois la mise en route effectuée ces avances seront modifiées afin de ne plus passer les points morts .
